# EUROPEAN PATENT SPECIFICATION

(11) **EP 0 588 625 B1**
(45) Date of publication and mention of the grant of the patent: **03.01.1996**
(21) Application number: 93307287.8
(22) Date of filing: 15.09.1993
(51) Int. Cl.: A63F 9/22

(54) **Entertainment machines with different playing modes**
Unterhaltungsautomat mit verschiedenen Spielmoden
Machine de divertissement avec différents modes de jeu

(30) Priority: 16.09.1992 GB 9219583
(43) Date of publication of application: 23.03.1994
(73) Proprietor: BARCREST LIMITED, Ashton-under-Lyne Lancashire OL7 0QQ (GB)
(72) Inventor: Wain,John Laurence, Cheadle Hulme, Cheshire SK8 6HA (GB)
(74) Representative: Quest, Barry

(56) References cited:
- US-A- 4 335 809
- PATENT ABSTRACTS OF JAPAN vol. 13, no. 595 (C-672)27 December 1989 & JP-A-01 250 288 (SONY CORP.) 5 October 1989

## Description

This invention relates to entertainment machines.

Where entertainment machines are located at premises, or a site, such as a public house or other establishment there may be an overall limit imposed on the permissible number of a particular kind of machine. Thus, there may be a maximum number (say 2 or 3) of gaming or AWP (amusement with prizes) machines, such as fruit machines, permitted on the premises of a public house. This limitation may not apply to non-gaming e.g. SWP (skill with prizes) machines whereby the premises may have 2 or 3 permitted AWP machines and several unrestricted SWP machines.

With this arrangement the problem arises that a player has to move from machine to machine in order to find a particular kind of AWP or SWP machine which he wishes to play or if he wishes to change from playing one kind of machine to another kind of machine.

An object of the present invention is to overcome this problem by facilitating player-selection amongst a range of different kinds of machines whilst retaining an overall limitation on the number of machines of a particular kind.

According to the invention therefore there is provided an entertainment machine system comprising a plurality of entertainment machines each having a range of different games-playing modes and each having a player operable selector for selecting a mode from the range, characterised in that the machines are interconnected and a limit is impose on the number of said machines which can be operated simultaneously in a predetermined common one of said modes.

With this arrangement, it will be appreciated that a range of machine modes can be made available at each of the machines without departing from the overall limitation on the number of machines which can be operated at any one time in the said predetermined mode.

Preferably, the same range of machine modes is made available at each machine. Alternatively if desired there may be a different range for each machine with at least the said predetermined mode being common to all the ranges.

There may be a single predetermined common mode having an imposed limit, or there may be a plurality of such predetermined common modes each having a respective limit.

The said selector may be a manual control used in relation to a displayed list, such as a row of press buttons alongside or marked with respective mode identifications, or a touch screen showing the displayed list, or any other suitable arrangement. When the limit is reached on the (or each) predetermined common mode, further selection of such mode may be made ineffective, or further selection may be denied and the respective mode identification may be removed from the list.

The machines may be self-sufficient machines containing everything necessary for operation in all of the respective modes, the said interconnection being used solely for the purpose of imposing the said limitation. Alternatively, the machines may be arranged to receive operating instructions or control data through the said interconnection. For example, each machine may contain operating instructions/data for a respective mode and this may be made available for sharing or interchange with each other machine. It is also possible to use a central control device to which all machines are connected and which is operable to effect the said limitation control and/or to provide, or control transfer/interchange of the respective mode instruction/data.

The machines may be of the kind having a playing display e.g. on a VDU screen or any other suitable device, together with manual player controls, a mechanism for coins or other credit, and a pay-out or reward mechanism. The machine modes may correspond to random-selection machines e.g. fruit machines, and to skill machines such as question and answer, or video games or the like.

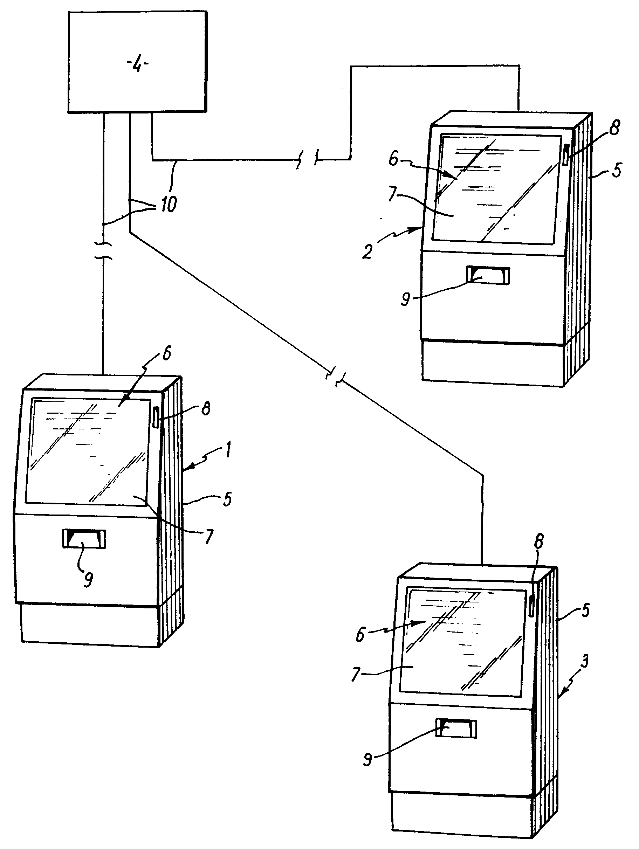

The invention will now be described further by way of example only and with reference to the accompanying drawing which is a diagrammatic representation of one form of a machine system according to the invention.

As shown in the drawing, multiple entertainment machines 1, 2, 3 (only three are shown for the sake of convenience) are located at premises (e.g. a public house) and are connected to a central control unit 4 at the same premises.

Each machine 1-3 comprises a floor-standing box structure 5 containing a VDU 6 having a touch screen 7 exposed at a front panel of the box structure 5. This panel contains an inlet slot 8 for coins (or tokens or notes or credit cards or the like), and an outlet slot 9 through which winnings can be dispensed.

Within the box structure (not shown) there is a coin (or credit) mechanism, a pay-out mechanism, and circuitry connected to these mechanisms and to the VDU 6 and touch screen 7 and to the central control unit 4 (via a cable 10).

The control unit 4 contains operational data for (say) six different game playing modes which correspond (say) to two different fruit machine modes and four different skill game machine modes. The control unit also contains operational data for operating the machines in a start-up or selection mode. The term mode is used here to refer to a complete operational procedure. A games playing mode is one in which the machine is operational for playing a particular kind of game. In the start-up/selection mode the machine is operational to respond to and effect a selection procedure.

In use, all machines are initially in the start-up or selection mode and the screen 7 displays a list of the six selectable machine modes. After first introducing the requisite value of credit into one of the machines, a player can select a desired one of the modes by touching the appropriate option on the touch screen 7.

By way of example, if the player selects one of the fruit machine modes, the VDU 6 will be activated to produce a display simulating three or four rotatable reels in conventional manner. If the player plays a game and wins, a pay-out may be made through the outlet slot 9. Games playing information (e.g. win charts) may be displayed on the VDU or on an adjacent supplementary VDU (not shown).

By selecting one of the other options, the player can put the machine into the other fruit machine mode or any of the skill game modes (e.g. question and answer, video game, etc.) with an appropriate display being produced on the screen 7 in each case.

The player is free to select any of the options subject to an overall limitation on the number of machines which can be operated in fruit machine modes at the same time. That is, it is only possible for (say) two of the machines to be operated at the same time as fruit machines (whether both being in the first kind of fruit machine mode, or both being in the second kind of fruit machine mode, or each being in a respective one of the two kinds of fruit machine modes). The central control unit 4 monitors and implements this limitation whereby when two of the machines are in fruit machine modes, a player cannot select either of the fruit machine modes on the other machine. This may be achieved by removing the fruit machine options from the displayed list (with corresponding cancellation of the ability to select such options) or by intercepting selection of such options so that the selection is not implemented. In each case a message may be displayed indicating that a fruit machine selection is not available.

As soon as play is discontinued in fruit machine mode on the respective machine, the ability to select such mode is reinstated for all machines.

With this arrangement, a player can select from a range of different kinds of games playing modes at each machine whilst the overall limit on number of fruit machine modes (i.e. two) is retained.

It is of course to be understood that the invention is not intended to be restricted to the details of the above embodiment which are described by way of example only. Thus for example, the limit may be more than two (e.g. if the system is used in an amusement arcade or club or other large establishment). The central control unit need not be located within the establishment, it may be located at a remote central position with an appropriate cable or other link. The machines need not be totally remotely 'soft' (i.e. remotely data operated) as described, they may incorporate some part of the operational data permanently within the machine and/or the display or other operation of the machine may be at least partially electro-mechanical or otherwise constructed.

## Claims

1. An entertainment machine system comprising a plurality of entertainment machines (1-3) each having a range of different games-playing modes and each having a player operable selector (7) for selecting a mode from the range, characterised in that the machines (1-3) are interconnected and a limit is imposed on the number of said machines which can be operated simultaneously in a predetermined common one of said modes.

2. A system according to claim 1 characterised in that the same range of machine modes is made available at each machine.

3. A system according to claim 1 or 2 characterised in that there is a single predetermined common mode having an imposed limit.

4. A system according to any one of claims 1 to 3 characterised in that the said selector is a manual control used in relation to a displayed list.

5. A system according to any one of claims 1 to 4 characterised in that when the said limit is reached on the predetermined common mode further selection of such mode is made ineffective.

6. A system according to any one of claims 1 to 4 characterised in that when the said limit is reached on the predetermined common mode further selection thereof is denied.

7. A system according to any one of claims 1 to 6 characterised in that the machines are arranged to be interconnected via a central control device which is operable to effect the said limitation control.

8. A system according to claim 7 characterised in that the central control device is arranged to provide operating instructions or control data for machine modes.

9. A system according to any one of claims 1 to 8 characterised in that the machines are of the kind having a playing display, manual player controls, a credit mechanism and a payout or reward mechanism.

10. A system according to any one of claims 1 to 9 characterised in that the machine modes correspond to random selection machines.

## Patentansprüche

1. Unterhaltungsautomaten-System mit mehreren Unterhaltungsautomaten (1 bis 3), die jeweils eine Reihe unterschiedlicher Spielarten sowie einen vom Spieler zu betätigenden Wahlschalter (7) aufweisen, mittels dessen eine Spielart aus der Reihe von Spielarten auszuwählen ist,
dadurch gekennzeichnet, daß die Automaten (1 bis 3) miteinander verbunden sind und die Anzahl der Automaten, die in einer vorgegebenen gemeinsamen Spielart gleichzeitig zu betätigen sind, begrenzt ist.

2. System nach Anspruch 1,
dadurch gekennzeichnet, daß an jedem Automaten dieselbe Reihe von Automaten-Spielarten zur Verfügung steht.

3. System nach den Ansprüchen 1 oder 2,
dadurch gekennzeichnet, daß eine einzige vorgegebene gemeinsame Spielart einer Begrenzung unterworfen ist.

4. System nach einem der Ansprüche 1 bis 3,
dadurch gekennzeichnet, daß der Wahlschalter eine manuelle Steuerung bildet, die in bezug auf eine angezeigte Liste eingesetzt wird.

5. System nach einem der Ansprüche 1 bis 4,
dadurch gekennzeichnet, daß bei Erreichen der Höchstgrenze in der vorgegebenen gemeinsamen Spielart eine erneute Wahl dieser Spielart unwirksam gemacht wird.

6. System nach einem der Ansprüche 1 bis 4,
dadurch gekennzeichnet, daß bei Erreichen der Höchstgrenze in der vorgegebenen gemeinsamen Spielart eine erneute Wahl dieser Spielart abgelehnt wird.

7. System nach einem der Ansprüche 1 bis 6,
dadurch gekennzeichnet, daß die Automaten über eine Zentralsteuerung miteinander zu verbinden sind, die zur Steuerung der Begrenzung einzusetzen ist.

8. System nach Anspruch 7,
dadurch gekennzeichnet, daß die Zentralsteuerung Betriebsanweisungen oder Steuerdaten für Automaten-Spielarten liefert.

9. System nach einem der Ansprüche 1 bis 8,
dadurch gekennzeichnet, daß die Automaten ein Spielfeld, manuelle Spielersteuerungen, einen Guthabensmechanismus sowie einen Auszahl- oder Vergütungsmechanismus aufweisen.

10. System nach einem der Ansprüche 1 bis 9,
dadurch gekennzeichnet, daß es sich um Spielarten für Automaten handelt, die nach dem Prinzip der zufälligen Auswahl arbeiten.

## Revendications

1. Système à machine de divertissement comprenant plusieurs machines (1 à 3) de divertissement, chaque machine comportant une série de modes différents de pratique de jeux et chacune de ces machines comportant un sélecteur (7) actionnable par un joueur pour sélectionner un mode parmi la série, caractérisé en ce que les machines (1 à 3) sont interconnectées et en ce qu'une limite est imposée au nombre de ces machines qui peuvent être activées simultanément pour un mode commun prédéterminé parmi ces modes.

2. Système selon la revendication 1, caractérisé en ce que la même série de modes de machine est disponible pour chaque machine.

3. Système selon la revendication 1 ou 2, caractérisé en ce qu'il y a un unique mode commun prédéterminé comportant une limite imposée.

4. Système selon l'une quelconque des revendications 1 à 3, caractérisé en ce que le sélecteur est une commande manuelle utilisée en rapport avec une liste affichée.

5. Système selon l'une quelconque des revendications 1 à 4, caractérisé en ce que, lorsque ladite limite est atteinte concernant le mode commun prédéterminé, la sélection supplémentaire dudit mode est rendue inopérante.

6. Système selon l'une quelconque des revendications 1 à 4, caractérisé en ce que, lorsque ladite limite est atteinte concernant le mode commun prédéterminé, la sélection supplémentaire dudit mode est déniée.

7. Système selon l'une quelconque des revendications 1 à 6, caractérisé en ce que les machines sont agencées pour être interconnectées par l'intermédiaire d'un dispositif de commande central qui peut réaliser la commande de limitation.

8. Système selon la revendication 7, caractérisé en ce que le dispositif de commande central est agencé pour fournir des instructions d'opérations ou des données de commande concernant des modes de machine.

9. Système selon l'une quelconque des revendications 1 à 8, caractérisé en ce que les machines sont du type comportant un affichage pour jeux, des commandes pour joueur manuelles, un mécanisme créditeur et un mécanisme de versement ou récompense.

10. Système selon l'une quelconque des revendications 1 à 9, caractérisé en ce que les modes de machine correspondent à des machines de sélection aléatoire.
